(19) Europäisches Patentamt / European Patent Office / Office européen des brevets

(11) **EP 2 975 930 B1**

(12) **FASCICULE DE BREVET EUROPEEN**

(45) Date de publication et mention de la délivrance du brevet:
**18.09.2019 Bulletin 2019/38**

(21) Numéro de dépôt: **14711254.4**

(22) Date de dépôt: **20.03.2014**

(51) Int Cl.:
*A01N 1/02* *(2006.01)*  *G01N 7/14* *(2006.01)*
*G01K 11/28* *(2006.01)*  *G01K 11/06* *(2006.01)*
*F25D 29/00* *(2006.01)*  *F25D 19/00* *(2006.01)*

(86) Numéro de dépôt international:
**PCT/EP2014/055563**

(87) Numéro de publication internationale:
**WO 2014/147158 (25.09.2014 Gazette 2014/39)**

(54) **CONTRÔLE DE L'ÉTAT DE CONGÉLATION D'UN FLUIDE BIOPHARMACEUTIQUE SE TROUVANT DANS UN CONTENEUR**

ÜBERWACHUNG DES EINFRIERZUSTANDS EINER BIOPHARMAZEUTISCHEN FLÜSSIGKEIT IN EINEM BEHÄLTER

MONITORING OF THE FREEZING STATE OF A BIOPHARMACEUTICAL FLUID FOUND IN A CONTAINER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2013 FR 1352589**

(43) Date de publication de la demande:
**27.01.2016 Bulletin 2016/04**

(73) Titulaire: **Sartorius Stedim North America Inc.
Bohemia, NY 11716 (US)**

(72) Inventeur: **CUTTING, Jonathan
East Setauket, NY 11733 (US)**

(74) Mandataire: **Derambure Conseil
66, rue de la Chaussée d'Antin
75009 Paris (FR)**

(56) Documents cités:
WO-A2-2011/063381    JP-A- H01 159 576
JP-A- 2000 044 939    US-A- 3 788 090
US-A1- 2012 102 982

**Description**

L'invention concerne le contrôle de l'état de congélation d'un fluide biopharmaceutique se trouvant dans un conteneur.

Elle a pour objet un conteneur apte à recevoir un fluide biopharmaceutique, spécialement équipé en vue du contrôle de l'état de congélation du fluide biopharmaceutique, une installation incluant un tel conteneur et un dispositif de contrôle de l'état de congélation du fluide biopharmaceutique, et un procédé de contrôle de l'état de congélation du fluide biopharmaceutique se trouvant dans un tel conteneur.

Dans le contexte de l'invention, on entend par « fluide biopharmaceutique », un fluide issu de la biotechnologie - milieux de cultures, cultures cellulaires, solutions tampon, liquides de nutrition artificielle, fractions sanguines et dérivés de produits sanguins ou un fluide pharmaceutique ou plus généralement un fluide destiné à être utilisé dans le domaine médical.

On connaît déjà un conteneur présentant une paroi périphérique souple, spécialement adapté pour recevoir un tel fluide biopharmaceutique, et ce de manière tout à fait satisfaisante. Généralement, un tel conteneur peut être associé à une structure rigide de support pour former un récipient de fluide biopharmaceutique. Un tel récipient est par exemple décrit dans EP 1 441 585. D'autres exemples de tels récipients peuvent être trouvés dans WO 2007/103917.

Pour favoriser la conservation du fluide biopharmaceutique avant une étape de procédé ou une utilisation ultérieure, il a de plus été proposé de le maintenir sous forme gelée. Pour cela, des systèmes de traitement thermique ont été prévus, notamment pour congeler le fluide biopharmaceutique contenu dans les conteneurs. Les spécificités des fluides biopharmaceutiques ont conduit au développement de conteneurs spécialement adaptés à la congélation, par exemple présentant une forme légèrement évasée tel que décrit dans EP 1 441 586.

De même, récemment, on a fourni des systèmes de congélation spécialement adaptés aux fluides biopharmaceutiques. Un tel système est par exemple décrit dans EP 1389292, et est particulièrement efficace. EP1407302 décrit un autre système, particulièrement adapté aux conteneurs trapézoïdaux. Récemment, on a décrit dans WO 2011/063381 un système de congélation amélioré à poches.

Comme on le comprend, pour des fluides biopharmaceutiques, le contrôle de la congélation est absolument critique. En effet, une congélation mal contrôlée peut conduire à la dégradation du fluide biopharmaceutique, voire à sa perte pure et simple. Par ailleurs, pour des raisons économiques, on cherche à ne pas ralentir outre mesure le processus de congélation. Ainsi, dans le but d'avoir plus d'informations sur le processus de congélation, on a commencé à équiper de capteurs de température les conteneurs à traiter thermiquement.

De tels capteurs présentent l'avantage de fournir une information depuis l'intérieur du conteneur. Toutefois, cette solution n'est pas parfaite. Premièrement, un tel capteur est intrusif à l'intérieur du conteneur. Il faut donc d'une part le réaliser en des matériaux qui ne perturbent pas le fluide biopharmaceutique et, d'autre part, le faire communiquer avec le monde extérieur également de manière non polluante pour le contenu du conteneur, ce qui peut nécessiter de le fixer de manière étanche et stérile à travers la paroi du conteneur.

Par ailleurs, un tel capteur ne donne qu'une information de portée géographique localisée, limitée à l'endroit où il se trouve. Tant que le fluide est majoritairement en état liquide, des mouvements de convection naturelle au sein du conteneur ou des inhomogénéités spatiales dans le traitement thermique peuvent passer inaperçues avec ces capteurs localisés. De plus, dès que la partie du fluide biopharmaceutique où se trouve le capteur va s'être solidifiée lors du processus de congélation, on n'aura plus aucune information avec ce capteur ailleurs qu'en sa localisation précise. Par ailleurs, le début du processus de décongélation sera aussi très difficile à surveiller avec une telle approche.

Une solution pourrait être d'augmenter le nombre de capteurs. Toutefois, outre les problèmes d'intrusion et de stérilité mentionnés plus haut, le coût d'un tel système va augmenter proportionnellement avec le volume du conteneur, ce qui n'est pas admissible.

Pour pallier ce problème, WO 2012/044403 a récemment proposé de monitorer l'évolution du front de congélation par imagerie ultra-sonore. Bien que ce système soit très prometteur, on cherche aujourd'hui un système alternatif simple, bon marché et non intrusif.

Le document US 2012/102982 A1 divulgue un système de contrôle de congélation de fluides biopharmaceutiques.

US 3 788 090 A et JP 2000 044939 A divulguent quant à eux des systèmes de détection de changement d'état d'un fluide au moyen de capteurs de pression.

Ci-après, un exposé de l'invention telle que caractérisée dans les revendications.

Selon un premier aspect divulgué dans la revendication 1, l'invention a pour objet un dispositif de contrôle de l'état de congélation d'un fluide biopharmaceutique dans un conteneur destiné à recevoir un fluide biopharmaceutique devant passer entre l'état liquide et l'état congelé. Le conteneur comprend une enveloppe périphérique en matière plastique, apte et destiné à être associé à un réceptacle de congélation.

Le dispositif de contrôle de l'état de congélation comporte un capteur adapté pour détecter un paramètre de contrôle qui est un paramètre macroscopique du conteneur, et un système d'analyse adapté pour déterminer un état de congélation du fluide biopharmaceutique sur la base du paramètre macroscopique du conteneur.

Par paramètre 'macroscopique' du conteneur, on entend un paramètre relatif au conteneur pris dans son ensemble, par opposition à un paramètre relatif à un emplacement localisé précis du conteneur, ce qui est typiquement le cas d'une donnée fournie par une sonde de température. Différents exemples de paramètres macroscopiques seront donnés ci-après, de manière non limitative. On peut par exemple mentionner le volume du conteneur, si celui-ci est variable, ou la pression de gaz dans le conteneur, si celle-ci est variable, ou un paramètre corrélé à ceux-ci.

De manière surprenante, on s'est rendu compte qu'on pouvait obtenir une information sur l'état de congélation du fluide biopharmaceutique à l'intérieur du conteneur en surveillant un paramètre du conteneur dans son ensemble, et ce quelle que soit la taille du conteneur. Ainsi, le système ci-dessus sera aussi bien adapté à des conteneurs de petite dimension (quelques centilitres ou moins) qu'à des conteneurs de grande dimension (au moins une ou plusieurs centaines de litres). Par ailleurs, ce système sera aussi efficace pour les opérations de congélation que pour les opérations de décongélation.

Selon l'invention, le capteur est adapté pour détecter une valeur du paramètre de contrôle de manière répétée au cours du temps au cours du procédé de traitement thermique.

Selon l'invention, les valeurs du paramètre au cours du temps présentent un changement brutal lors d'un changement d'état de congélation du fluide biopharmaceutique, et le système d'analyse est adapté pour détecter ce changement brutal.

Selon une réalisation, les valeurs du paramètre au cours du temps présentent un changement brutal lorsqu'on passe entre un état où une portion du fluide biopharmaceutique n'est pas congelée et un état où l'intégralité du fluide biopharmaceutique est congelé.

Selon une réalisation, les valeurs du paramètre au cours du temps présentent un changement brutal lorsqu'on passe entre un état où l'intégralité du fluide biopharmaceutique n'est pas congelée et un état où une portion du fluide biopharmaceutique est congelé.

Selon une réalisation, le système d'analyse est adapté pour déterminer un état de congélation du fluide biopharmaceutique sur la base d'une valeur absolue du paramètre de contrôle.

Selon une réalisation, le système d'analyse est adapté pour déterminer l'état de congélation du fluide biopharmaceutique sur la base d'une valeur initiale du paramètre de contrôle, et d'une évolution dans le temps de la valeur absolue du paramètre de contrôle déterminée à partir du capteur.

Selon l'invention, le paramètre de contrôle est une pression de gaz dans une partie supérieure du conteneur ménagé au-dessus du fluide biopharmaceutique dans une partie terminale de tête du conteneur emplie d'un gaz.

Selon l'invention, le dispositif de contrôle comprend une ligne d'entrée/de sortie du gaz apte à être associée en communication et de manière étanche avec un port d'entrée / de sortie de gaz du conteneur, ledit port étant situé dans une partie supérieure du conteneur ménagé au-dessus du fluide biopharmaceutique à une partie terminale de tête du conteneur emplie d'un gaz, le capteur étant adapté pour déterminer un paramètre de l'espace de tête.

Selon une réalisation, le dispositif de contrôle comporte en outre une valve d'ouverture / de fermeture associée au port d'entrée / de sortie de gaz.

Selon une réalisation, le capteur comprend un détecteur de pression apte et destiné à mesurer ou contrôler la pression du gaz dans la partie supérieure ou dans la ligne d'entrée / de sortie de gaz, un système de régulation apte et destiné à commander l'admission / le relâchement du gaz dans / depuis la partie supérieure, via le port (30) d'entrée / de sortie de gaz et la ligne d'entrée / de sortie de gaz, selon un profil de pression souhaité dans l'espace de tête.

Selon l'invention, le dispositif de contrôle comprend en outre un moyen apte et destiné à admettre / relâcher du gaz dans / de l'espace de tête, via le port d'entrée / de sortie de gaz et la ligne d'entrée / de sortie de gaz.

Selon l'invention, le système de régulation est destiné à commander l'admission / le relâchement du gaz dans / depuis la partie supérieure, via le port d'entrée / de sortie de gaz et la ligne d'entrée / de sortie de gaz, opère de sorte à admettre du gaz lorsque la pression du gaz dans la partie supérieure diminue et à relâcher du gaz lorsque la pression du gaz dans la partie supérieure augmente.

Selon une réalisation, le dispositif de contrôle comprend en outre un système de commande adapté pour commander thermiquement le réceptacle de congélation en fonction de l'état de congélation déterminé par le système d'analyse.

Selon un autre aspect, l'invention se rapporte à un système de traitement thermique d'un fluide biopharmaceutique comprenant un réceptacle de traitement thermique apte et destiné à recevoir un conteneur de fluide biopharmaceutique, et un tel dispositif de contrôle.

Selon une réalisation, le système de traitement thermique comprend une pluralité d'applicateurs thermiques dans le réceptacle, commandables indépendamment, et dans lequel le système de commande commande indépendamment lesdits applicateurs thermiques.

Selon une réalisation, le système comprend une pluralité de réceptacles de traitement thermique chacun apte et destiné à recevoir un conteneur respectif de fluide biopharmaceutique, et chaque réceptacle étant commandable indépendamment par le système de commande, dans lequel le système de commande est adapté pour commander indépendamment chaque réceptacle de traitement thermique selon l'état de congélation déterminé pour chaque conteneur.

Selon un autre aspect, l'invention se rapporte à une méthode de contrôle de l'état de congélation d'un fluide biopharmaceutique dans un conteneur selon la revendication 8.

On décrit maintenant brièvement les figures des dessins.

La figure 1 est une vue schématique représentant un système de traitement thermique de fluide biopharmaceutique.

La figure 2 est une vue en perspective représentant un récipient de fluide biopharmaceutique selon un premier mode de réalisation ne faisant pas partie de l'invention, convenant pour le système de la figure 1.

La figure 3 est une vue schématique partielle en perspective d'une partie d'un système de traitement thermique.

La figure 4 est un ensemble de vues de côté représentatives d'un exemple de procédé de traitement thermique de fluide biopharmaceutique basé avec le système de la figure 3.

Les figures 5a et 5b sont des vues de dessus et de côté, respectivement, du système de la figure 3.

La figure 6 est une vue schématique en perspective d'une partie d'un système de traitement thermique selon un deuxième mode de réalisation qui lui fait partie de l'invention.

La figure 7 est une courbe illustrative d'un exemple de mise en oeuvre du système suivant l'invention.

La figure 8 est une vue perspective en éclaté d'un deuxième mode de réalisation de récipient de fluide biopharmaceutique ne faisant pas partie de l'invention.

La figure 9 est une vue schématique de côté d'une partie d'encore un autre exemple de système de traitement thermique.

La figure 10 est une vue de face de la figure 9.

Ci-après un exposé détaillé de plusieurs modes de réalisation de l'invention assorti d'exemples et de référence aux dessins.

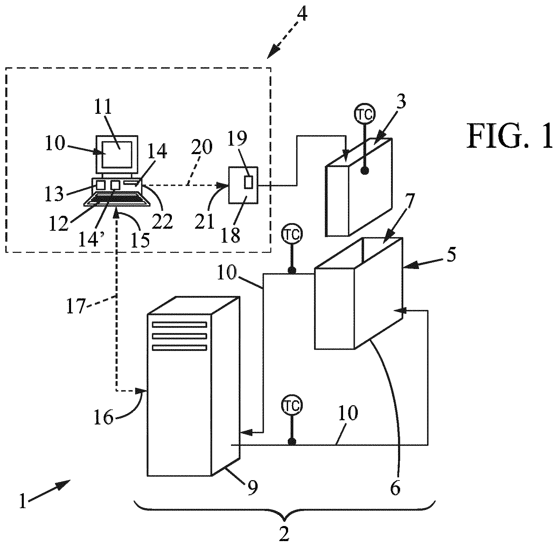

L'invention a pour objet un système de traitement thermique 1 de fluide biopharmaceutique, dont un exemple est visible sur la figure 1. Un système de traitement thermique 1 comprend une installation de traitement thermique 2 adaptée pour appliquer un traitement thermique à un récipient 3 de fluide biopharmaceutique, et un dispositif de contrôle 4.

Comme cela est visible sur la figure 1, l'installation de traitement thermique 2 peut comprendre un réceptacle 5 de traitement thermique comprenant un corps 6 définissant une cavité 7 de forme adaptée pour recevoir un récipient 3 de fluide biopharmaceutique de forme adaptée. L'installation de traitement thermique peut par exemple opérer par conduction thermique entre le corps 6 et le récipient 3 de fluide biopharmaceutique. Dans un tel exemple, le corps 6 porte un ou des éléments applicateurs 8 qui sont placés en contact direct ou indirect avec le récipient 3 de fluide biopharmaceutique lorsque celui-ci est introduit dans la cavité. Des exemples d'éléments applicateurs seront décrits plus loin. Le ou les éléments applicateurs 8 appliquent un champ thermique dans la cavité 7, par exemple en étant en contact direct ou indirect avec le récipient 3 de fluide biopharmaceutique.

L'installation 2 de traitement thermique comporte également un générateur thermique 9, adapté pour générer du chaud et/ou du froid sur commande. Le générateur thermique 9 est relié aux éléments applicateurs 8 par une ligne de transport 10, de sorte que le générateur thermique 9 puisse modifier la température des éléments applicateurs 8. Selon les applications, le générateur thermique peut être un cryo-générateur adapté pour générer du froid, un générateur de chaleur, ou une combinaison de ces deux appareils.

Le dispositif de contrôle 4 peut comporter plusieurs appareils réunis en une même station, ou distribués. Le dispositif de contrôle peut comporter une interface utilisateur 10 (par exemple, écran 11, souris, clavier 12, etc...) permettant à un utilisateur d'intéragir avec l'installation de traitement thermique 2. Une telle interaction comprend par exemple l'affichage sur l'écran 11 de données de température appliquées par le générateur thermique 9. Ainsi, le dispositif de contrôle peut comprendre une mémoire 13 stockant des données de température, et une unité centrale 14 traitant ces données pour les afficher sur l'écran 11, par exemple sous forme de courbe ou de valeurs alpha-numériques. Le dispositif de contrôle 4 comprend ainsi également une interface de communication 15 communiquant avec une interface de communication 16 du générateur thermique 9. Une ligne de communication 17 est générée entre les interfaces de communication 15 et 16. Cette ligne peut être filaire ou sans-fil. Ainsi, selon ce premier exemple, les données de température appliquée sont transmises du générateur thermique 9 au dispositif de contrôle 4 selon cette ligne de communication 17.

Un deuxième exemple d'interaction entre le dispositif de contrôle 4 et l'installation de traitement thermique 2 peut être la commande de l'installation de traitement thermique 2 par le dispositif de contrôle 4. Par exemple, un système de commande 14' de l'unité centrale 14 du dispositif de contrôle 4 envoie au générateur thermique 9 un profil de température à appliquer. Ce profil peut être une température cible, un profil de température au cours du temps, ou autre.

Ce profil de température peut être entré dans le dispositif de contrôle par un utilisateur, par exemple par l'intermédiaire d'une interface d'entrée (clavier 12), ou à partir d'une mémoire 13 du dispositif de contrôle 4, le cas échéant amovible (clé USB, CD-ROM, ...).

Le dispositif de contrôle 4 comporte également une instrumentation 18. Cette instrumentation 18 sera décrite plus en détail ci-après. Pour l'instant, on peut préciser que cette instrumentation 18 comporte un capteur 19 adapté pour mesurer un paramètre macroscopique d'un conteneur du récipient 3 de fluide biopharmaceutique, et une ligne de communication 20 adaptée pour transmettre des données de détection obtenues par le capteur 19 à la mémoire 13 du dispositif de contrôle 4 pour traitement ultérieur. Comme la ligne de communication 17, la ligne de communication 20 peut être filaire ou sans fil, et s'étendre d'une première interface de communication 21 associée au capteur 19 à une deuxième interface de communication 22 associée à l'unité centrale 14.

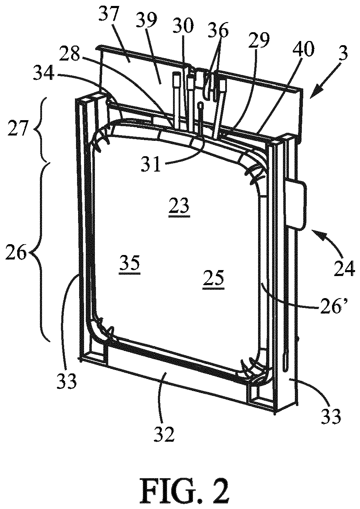

On se réfère plus spécialement à la figure 2 illustrant un récipient 3 à usage biopharmaceutique ayant un conteneur 23 flexible, empli d'un contenu, à savoir un produit biopharmaceutique qui dans son ensemble est liquide ou pâteux, réceptionné et maintenu extérieurement dans une structure 24 rigide de réception et de maintien. Soit le contenu est liquide ou pâteux en permanence, soit il ne l'est qu'à un moment ou une période particulière. Par exemple, le contenu peut se trouver dans un état solide, par suite d'une opération de congélation ou dans un état fluide, notamment après sa décongélation.

On entend ici par produit biopharmaceutique, un produit issu de la biotechnologie - milieux de cultures, cultures cellulaires, solutions tampon, liquides de nutrition artificielle, ou un produit pharmaceutique ou plus généralement un produit destiné à être utilisé dans le domaine médical. Le produit biopharmaceutique est liquide ou pâteux dans son ensemble du moins lorsqu'il doit être mélangé, de sorte, précisément à pouvoir être mélangé. Il peut ne présenter qu'une seule phase fluide ou plusieurs, y compris des produits originellement solides ou ayant une certaine tenue, à mélanger dans un support fluide. Un tel récipient 3 est destiné typiquement à des fins de préparation d'un produit biopharmaceutique, de stockage, de transport, ou de réalisation d'un certain processus de nature physique, chimique ou biologique tel que mélange, ou bioréacteur ou système de congélation, décongélation.

Le conteneur 23 flexible comporte une enveloppe 25 souple qui limite un espace intérieur, apte à recevoir le contenu et ici le recevant effectivement.

Un tel conteneur 23 est typiquement une poche 3D qui comporte deux grandes parois reliées par et soudées à deux goussets latéraux, pouvant être pliée à plat (notamment pour le stockage et le transport) ou dépliée déployée (pour être emplie d'un contenu), le volume de l'espace intérieur pouvant être de 50 litres au moins, jusqu'à 3.000 litres, voire plus. Une telle poche 3D est décrite dans le document WO00/04131A1 ou commercialisée sous la marque FLEXEL<(R)> 3D. Il est entendu que cette réalisation de poche est donnée à titre purement exemplatif, le conteneur flexible pouvant être réalisé différemment. Dans leurs principes, l'agencement et la réalisation d'un tel conteneur 23 flexible font partie des connaissances générales de l'homme du métier ou sont à sa portée. Dans tous les cas, le conteneur 23 présente une certaine flexibilité, étant réalisé en un film en matière plastique ayant une certaine souplesse, monocouche ou le plus souvent multicouche. C'est notamment pour assurer le maintien extérieur d'un tel conteneur 23 de grand volume, flexible, une fois empli de contenu, qu'il est prévu de le placer et le maintenir extérieurement dans la structure 24 rigide de réception et de maintien.

Le conteneur flexible 23, empli et en situation, présente une partie inférieure 26, disposée horizontalement, une partie latérale 26' périphérique, et une partie supérieure 27, également disposée horizontalement. Il présente également un axe principal AA sensiblement vertical, par rapport auquel se comprennent les qualificatifs « inférieur », « supérieur », « latéral », « horizontal » et « vertical » appliqués au conteneur flexible dans son ensemble. Sous l'effet de la gravité, lors du traitement thermique, le contenu fluide, liquide, pâteux ou partiellement solide va se trouver principalement dans la partie inférieure 26 du conteneur flexible 23, alors que la partie supérieure 27 va principalement contenir un gaz à une pression P.

Le conteneur 23 flexible est le plus souvent pourvu de ports, tels que, par exemple, un port 28 d'entrée ou d'introduction d'un produit à mélanger au contenu du conteneur 23, situé dans la partie supérieure 27 du conteneur flexible 2, un port 29 de sortie de produit mélangé depuis le conteneur 23, un port 30 d'amenée de gaz, le cas échéant un port 31 permettant le montage d'un organe fonctionnel ou de moyens de mesure, par exemple d'un paramètre reflétant ou en relation avec l'homogénéité, l'hétérogénéité ou le mélange du contenu de l'espace intérieur.

Par exemple, de tels moyens de mesure sont sensibles à la lumière et mesurent la transparence ou l'opacité ou l'homogénéité ou l'hétérogénéité du contenu du conteneur flexible 23 ou le temps de mélange de son contenu. Dans leurs principes, l'agencement de tels ports 28-31 font partie des connaissances générales de l'homme du métier ou sont à sa portée. Les 4 ports sont par exemple disposés en partie supérieure 27 du conteneur, le port 29 de sortie pouvant alors être relié au fond du conteneur 23 flexible à l'intérieur de celui-ci par une tubulure interne non représentée. Le port 30 d'amenée de gaz se situe préférentiellement en communication avec la partie supérieure 27 du conteneur 23 flexible comprenant du gaz.

La structure 24 rigide de réception et de maintien comprend typiquement, en situation, une paroi inférieure de fond 32, disposée horizontalement, et une paroi latérale 33, disposée verticalement, et une ouverture 34 en partie supérieure pour la mise en place et l'enlèvement du conteneur 23 flexible. La structure 24 rigide de réception et de maintien délimite un espace intérieur 35 accessible par l'ouverture 34. Dans cet espace 35 est réceptionné et maintenu extérieurement le conteneur 23 flexible dont l'enveloppe 25 souple est apte à venir s'appliquer par sa partie inférieure 26 et par sa partie latérale 26' sur la face intérieure de la paroi de fond 32 et de la paroi latérale 33. En outre, La structure 24 rigide de réception et de maintien est le plus souvent pourvue d'orifices 36 avec lesquels peuvent coopérer les ports du conteneur 23 flexible. Le cas échéant, la structure 24 rigide de réception et de maintien comporte également des moyens de contention 37 aptes à venir s'appliquer sur la partie supérieure 27 du conteneur 23 flexible.

Les moyens de contention 37 peuvent par exemple comprendre un volet de contention 39 articulé sur les parois latérale 33 au moyen d'une charnière 40 entre une position ouverte, visible sur la figure 2, et une position fermée où le volet 39 s'étend sensiblement horizontalement et est verrouillé pour maintenir le conteneur 23 dans l'espace intérieur 35. Le volet 39 comprend des fentes débouchantes comprenant les orifices 36 permettant l'accès aux pores 28-31.

Dans leurs principes, l'agencement et la réalisation d'un tel ensemble rigide de réception et de maintien 3 font partie des connaissances générales de l'homme du métier ou sont à sa portée. Dans tous les cas, la structure 24 rigide de réception et de maintien est rigide et constitue une partie fixe et indéformable sur laquelle prend appui le conteneur 23 flexible. Bien entendu, l'ensemble rigide de réception et de maintien 3 peut être transporté, et éventuellement démonté ou plié.

En variante, on peut ne pas avoir une telle structure rigide 24. Cela peut être en particulier le cas pour des conteneurs de petites dimensions, de l'ordre de quelques litres (1 à 5 litres environ) plus facilement manipulables.

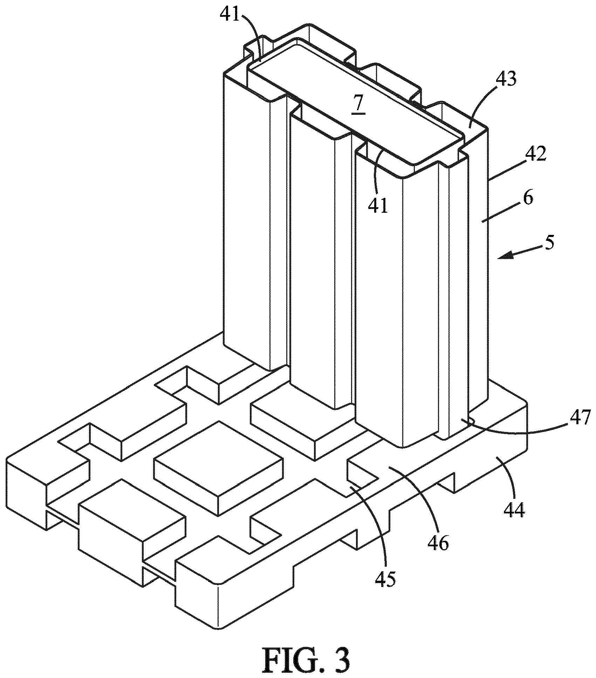

La figure 3 montre un réceptacle 5 spécialement adapté pour recevoir un récipient de fluide biopharmaceutique tel que décrit ci-dessus. Le réceptacle 5 comprend un corps 6 définissant une cavité 7. Le corps 6 comprend une paroi interne 41 s'étendant depuis une extrémité supérieure ouverte vers un fond inférieur. La paroi interne 41 définit une surface de contact pour le récipient 3. Le corps 6 comprend également une paroi externe 42 s'étendant entre une extrémité supérieure au niveau de l'extrémité supérieure de la paroi interne 41 vers le bas. La paroi interne 41 et la paroi externe 42 définissent entre elles une pluralité de poches 43, qui sont des cavités s'étendant entre la paroi interne 41 et la paroi externe 42 de haut en bas. On peut par exemple prévoir que la paroi interne 41 soit sensiblement plane sur chaque côté longitudinal de la cavité 7, et que, sur ce même côté, la paroi externe présente un profil uniforme en créneaux, chaque créneau définissant avec la paroi interne 41 une poche 43.

L'installation 2 de traitement thermique peut par ailleurs comprendre un socle 44 sur lequel est posé le réceptacle 5. On peut par exemple prévoir un maintien mécanique du réceptacle 5 sur le socle 44. Par exemple, le réceptacle 5 et le socle 44 coopèrent par complémentarité de formes. Dans l'exemple présenté, le socle 44 comprend une rainure 45 dans sa face supérieure 46. Le réceptacle 5 comprend une partie 47 faisant saillie et insérée dans la rainure 45. Par exemple, la partie 47 faisant saillie est prévue sur chaque petit côté latéral de la paroi externe 42. Ainsi, les parties 47 faisant saillie sont insérées dans la rainure 45 formées dans la face supérieure 46 du socle 47, et le fond des poches 43 repose sur cette face supérieure 46.

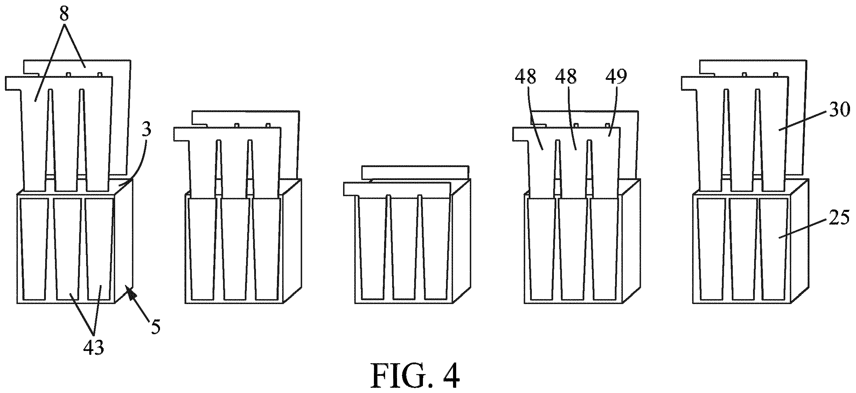

Un exemple de procédé de traitement thermique est ainsi décrit par référence avec la figure 4. Tout d'abord, le récipient 3 est placé dans le réceptacle 5. Puis, on traite thermiquement le récipient 3 au moyen d'éléments applicateurs 8. Dans le présent exemple, on utilise deux éléments applicateurs, chacun associé à un grand côté respectif du réceptacle 5. Chaque élément applicateur 8 comporte une pluralité de doigts 48 de refroidissement parallèles, chacun entrant dans une poche 43 respective du réceptacle 5. Les doigts 48 d'un même élément applicateur 8 sont reliés entre eux et à l'extérieur par un distributeur 49. Le distributeur 49 est relié au générateur thermique 9, pour appliquer le traitement thermique au récipient 3. Le traitement thermique (par exemple réchauffage ou refroidissement, congélation ou décongélation) est ensuite appliqué au récipient 3 par l'intermédiaire de la paroi interne 41.

Au bout d'un certain temps, une fois le traitement thermique terminé, les éléments applicateurs 8 peuvent être retirés de la manière inverse de la manière par laquelle ils ont été insérés.

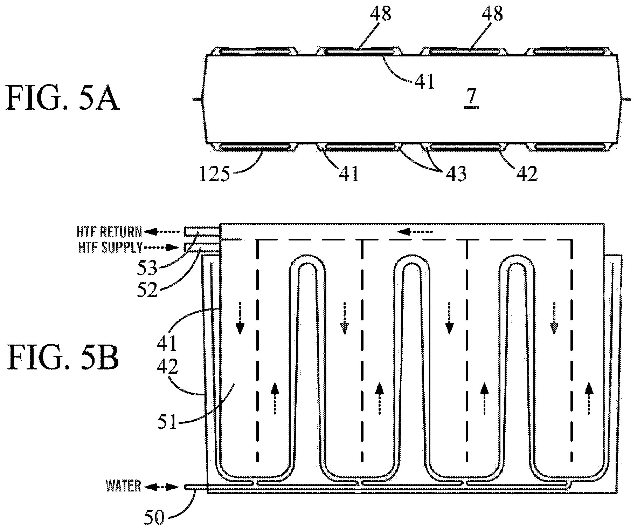

Comme cela est visible sur la figure 5b, on peut prévoir de pré-emplir les poches 43 d'un fluide améliorant le transfert de chaleur entre l'élément applicateur 8 et la paroi interne 41 du corps 6. Un tel fluide est par exemple de l'eau. Ainsi, on laisse un espace permettant aux éléments applicateurs 8 de rentrer dans les poches 43, mais cet espace est rempli d'un fluide permettant un bon transfert de température. Ainsi, le fond du réceptacle 5 est muni d'une ligne 50 d'arrivée de ce fluide de transfert, et apte à emplir le fond de chaque poche 43.

Par ailleurs, chaque élément applicateur 8 comporte une conduite interne 51 permettant la circulation d'un fluide de traitement thermique. La conduite interne 51 s'étend par exemple d'une entrée 52 à une sortie 53 disposées côte à côte, et serpente à l'intérieur des doigts 48 de refroidissement d'un même élément applicateur. Le fluide de traitement thermique provient à l'entrée 52 depuis le générateur thermique 9.

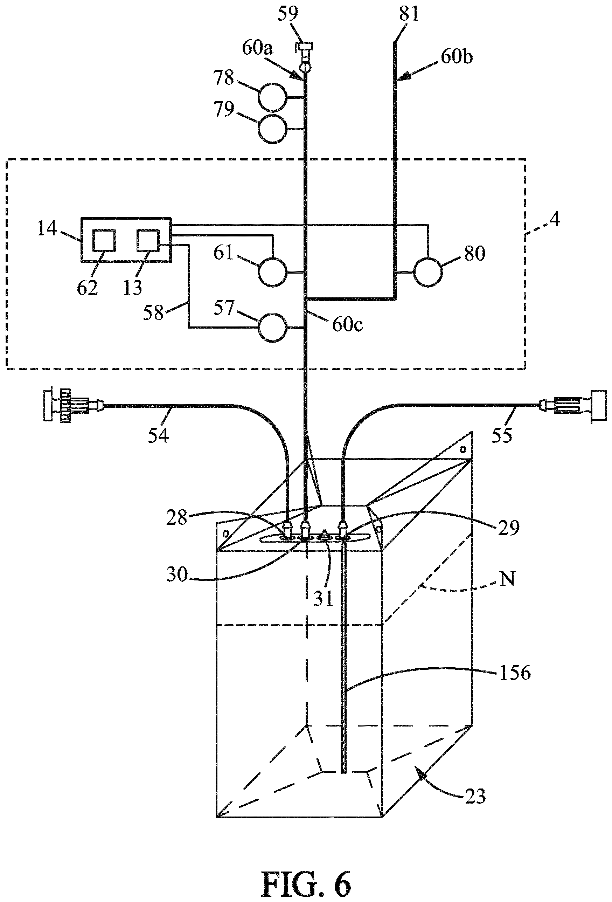

La figure 6 représente maintenant de manière schématique le conteneur 23 de fluide biopharmaceutique et un dispositif de contrôle 4 de l'état de congélation du fluide biopharmaceutique contenu dans le conteneur 23. Le système peut également comporter une ligne 54 de remplissage en communication fluide étanche avec le port 28 d'entrée du conteneur 23, pour délivrer du fluide biopharmaceutique à l'intérieur du conteneur 23. Le système peut comporter une ligne 55 de vidange en communication fluide étanche avec le port 29 de sortie du conteneur 23, pour délivrer du fluide biopharmaceutique hors du conteneur 23. Sur cette figure, on a représenté la tubulure 156 interne au conteneur 23 et reliant le port de sortie 29 au fond du conteneur 23.

Le dispositif de contrôle 4 comporte également un capteur adapté pour détecter un paramètre macroscopique du conteneur 23. De manière générale, le paramètre macroscopique découle directement ou indirectement de la densité moyenne de la portion non gazeuse du contenu du récipient 23.

Un premier exemple conforme à l'invention va être décrit ci-dessous.

Dans ce premier exemple, le conteneur 23 n'est rempli que partiellement de fluide biopharmaceutique, et le niveau de fluide dans le conteneur est représenté schématiquement par une ligne pointillée horizontale N sur la figure 6. Ainsi, la partie supérieure de tête du conteneur 23 (au-dessus du pointillé) est remplie de gaz.

Dans ce premier exemple, la pression P du gaz contenu dans le conteneur 23 est régulée par un système de régulation de pression. On peut par exemple utiliser un système tel que ceux utilisés pour vérifier la qualité de filtres. La régulation de la pression interne au conteneur 23 permet d'éviter que la pression de gaz dépasse un seuil prédéterminé qui pourrait atteindre à l'intégrité physique du conteneur. Par ailleurs, le fait que la pression soit maintenue au-dessus d'un certain seuil permet de garantir un contact physique entre la partie supérieure du conteneur 23 et la paroi interne 41 du système de traitement thermique. Ainsi, le système de régulation de pression comprend tout d'abord un détecteur de pression 57. Selon l'invention, le détecteur de pression 57 est situé dans un emplacement en communication fluide avec l'intérieur du conteneur 23, et est adapté pour détecter la pression du gaz dans la partie supérieure de tête du conteneur 23. Par exemple, le détecteur de pression 57 va être situé dans la ligne d'entrée/sortie de gaz 60. Le détecteur de pression 57 transmet des données de pression mesurée, régulièrement au cours du temps, à la mémoire 13 de l'unité centrale 14. On peut par exemple prévoir une ligne de transmission 58 filaire s'étendant depuis le détecteur de pression 57 jusqu'à l'unité centrale 14. Le détecteur de pression 57 détecte un paramètre de contrôle qui est un paramètre macroscopique du conteneur 23, à savoir prenant en compte le conteneur 23 flexible dans son ensemble. En effet, la pression dans l'espace de tête dépend de l'état du conteneur dans son ensemble, et pas de l'emplacement du détecteur de pression 57.

La ligne d'entrée/sortie de gaz 60 comprend un tronçon d'amenée de gaz 60a, un tronçon de sortie de gaz 60b, parallèle au tronçon d'amenée de gaz 60a, et un tronçon commun 60c qui, à une extrémité, est relié aux tronçons d'amenée de gaz 60a et de sortie de gaz 60b, et à l'autre extrémité est relié au port d'entrée/de sortie de gaz 30. Le détecteur de pression 57 est placé de manière à pouvoir détecter la pression de gaz dans le tronçon commun 60c. Le système de régulation de pression comprend également une source de gaz 59 reliée de manière fluide tronçon d'amenée de gaz 60a. Le tronçon d'amenée de gaz 60a peut porter un capteur de pression 78 et un contrôleur 79 adaptés pour réguler la pression du gaz relâché depuis la source de gaz 59 vers le tronçon commun 60c de la ligne d'entrée/sortie de gaz 60. On prévoit également une valve d'entrée 61 sur le tronçon d'amenée de gaz 60a de la ligne 60 entre la source 59 et le port 30 d'amenée de gaz. La valve d'entrée 61 est contrôlée par l'unité centrale 14 en fonction des données de pression détectées par le détecteur de pression 57 pour alternativement admettre du gaz depuis la source 59 à l'intérieur du conteneur 23 ou interdire cette admission. Le gaz en question est par exemple de l'air ou de l'azote ($N_2$). On prévoit également une valve de sortie 80 sur le tronçon de sortie de gaz 60b de la ligne 60 entre le tronçon commun 60c et une sortie 81 vers l'extérieur. La valve de sortie 80 est contrôlée par l'unité centrale 14 en fonction des données de pression détectées par le détecteur de pression 57 pour alternativement relâcher du gaz depuis le conteneur 23 ou interdire ce relâchement.

Selon l'invention, on définit un profil de pression de consigne pour les données de pression mesurées à l'intérieur du conteneur 23 flexible. Par exemple, on définit un profil de pression souhaitée constante à une valeur donnée, telle que par exemple 100 millibars (mbar). En pratique, on définit une valeur seuil supérieure et une valeur seuil inférieure. La pression est considérée comme constante si ces deux valeurs sont proches par rapport à la valeur absolue de l'une de celles-ci (par exemple la différence entre les deux valeurs seuils inférieure à 10% de la valeur seuil supérieure). On définit également une pression de fermeture intermédiaire entre ces deux valeurs seuil. On peut alternativement définir deux pressions de fermeture distinctes, l'une associée à la valeur seuil inférieure et supérieure à celle-ci, et l'autre associée à la valeur seuil supérieure et inférieure à celle-ci.

Ainsi, si la pression détectée est supérieure à cette valeur seuil supérieure, la valve de sortie 80 est ouverte par l'unité centrale 14, et le gaz en excès est libre de s'échapper, jusqu'à ce que la pression dans le conteneur 23 atteigne la pression de fermeture. Si la pression détectée est inférieure à cette valeur seuil inférieure, la valve d'entrée 61 est ouverte par l'unité centrale 14, et le gaz de la source est admis en direction de l'intérieur du conteneur 23, jusqu'à ce que la pression dans le conteneur 23 atteigne la pression de fermeture.

Suivant l'invention, l'unité centrale 14 comprend un système d'analyse 62 adapté pour déterminer l'état de congélation du fluide contenu dans le récipient, lequel système d'analyse 62 comprend un analyseur des données de pression détectée par le détecteur de pression 57 au cours du temps.

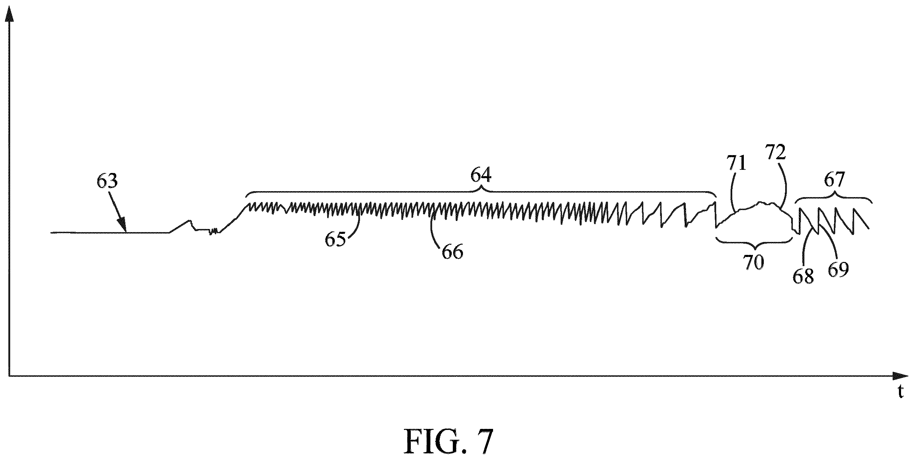

Conformément à l'invention, la figure 7 représente une courbe 63 de la pression au cours du temps, telle que détectée par le détecteur de pression 57, au cours d'une opération de congélation du fluide biopharmaceutique, dans le cas décrit ci-dessus d'une régulation de pression de gaz constante dans le conteneur 23. Au cours d'une première portion 64 de l'étape de congélation, le fluide initialement liquide se solidifie petit à petit. Comme cela est généralement connu, cette étape s'accompagne d'un accroissement de volume du fluide biopharmaceutique dans le conteneur 23, car la densité de celui-ci sous forme solide est inférieure à sa densité sous forme liquide. Cette augmentation de volume s'accompagne d'une compression du gaz dans l'espace de tête du conteneur 23. La compression progressive du gaz se voit, sur la première portion 64 de la courbe, par une zone 65 de la courbe penchée en diagonale depuis un point en bas à gauche vers un point en haut à droite (accroissement de la pression mesurée au cours du temps). La pression étant régulée à une pression constante, lorsque l'accroissement de pression décrit plus haut devient supérieur à une valeur seuil supérieure, l'unité centrale 14 commande l'ouverture de la valve de sortie 80, et ainsi l'échappement de gaz depuis l'espace de tête du conteneur 23. La dépression brusque du gaz due à l'ouverture de la valve de sortie 80 se voit, sur la première portion 64 de la courbe, par une zone 66 de la courbe penchée en diagonale depuis un point en haut à gauche vers un point en bas à droite (chute de la pression mesurée au cours du temps). La valve de sortie 80 est ouverte jusqu'à ce que la pression mesurée redevienne inférieure à une valeur seuil, moment auquel l'unité centrale 14 commande la fermeture de la valve de sortie 80. Au cours de cette ouverture, la pression change de manière brutale, ce qui se traduit par le fait que la pente de la zone 66 est très supérieure à la pente de la zone 65, en valeur absolue.

Le phénomène ci-dessus se reproduit de manière répétée tant que du liquide du fluide biopharmaceutique passe à l'état solide.

Supposant maintenant que l'intégralité du fluide biopharmaceutique contenu dans le conteneur 23 est congelé à l'état solide. La poursuite du refroidissement se traduit par une augmentation de la densité du solide, et par conséquent à une chute du volume du fluide biopharmaceutique contenu dans le récipient. Cette baisse de volume se traduit par une augmentation du volume de l'espace supérieure de tête. Cette augmentation de volume tend à diminuer la pression mesurée dans l'espace supérieur de tête du conteneur 23. La dépression progressive du gaz se voit, sur une deuxième portion 67 de la courbe, par une zone 68 de la courbe penchée en diagonale depuis un point en haut à gauche vers un point en bas à droite (chute de la pression mesurée au cours du temps). La pression étant régulée à une pression constante, lorsque la chute de pression décrite plus haut devient inférieure à une valeur seuil, l'unité centrale 14 commande l'ouverture de la valve d'entrée 61, et ainsi l'admission de gaz depuis la bonbonne 59 vers l'espace de tête du conteneur 23. La surpression brusque du gaz dûe à l'ouverture de la valve d'entrée 61 se voit, sur la deuxième portion 67 de la courbe, par une zone 69 de la courbe penchée en diagonale depuis un point en bas à gauche vers un point en haut à droite (hausse de la pression mesurée au cours du temps). La valve d'entrée 61 est ouverte jusqu'à ce que la pression mesurée redevienne supérieure à une valeur seuil, moment auquel l'unité centrale 14 commande la fermeture de la valve d'entrée 61. Au cours de cette ouverture, la pression change de manière brutale, ce qui se traduit par le fait que la pente de la zone 69 est très supérieure à la pente de la zone 68, en valeur absolue.

Ainsi, pendant une phase de congélation, la valve de sortie 80 commande un relâchement du gaz. Une fois la congélation achevée, la valve d'entrée 61 commande une admission du gaz. La détection du passage entre ces deux états témoigne donc de l'achèvement de la phase de congélation. En effet, le phénomène d'accroissement de la densité du solide ne commence à se produire qu'une fois l'intégralité du passage en phase solide achevée.

Comme cela est visible en particulier sur la figure 7, la détection du passage entre les deux états se traduit par une portion 70 intermédiaire de la courbe de pression en fonction du temps, située entre les deux portions 64 et 67. Dans cette portion intermédiaire 70, la courbe de pression en fonction du temps ne ressemble pas au motif des portions 64 ou 67. En fait, la pression commence par augmenter dans une première zone 71 sans atteindre la valeur seuil supérieure, puis diminue dans une deuxième zone 72 jusqu'à atteindre la valeur seuil inférieure.

Un analyseur de données du système d'analyse 62 de l'unité centrale 14 est tout à fait apte à identifier dans laquelle des portions 64, 67 ou 70 une série de données mesurées pendant un intervalle de temps court se trouve. Il suffit par exemple au système d'analyse de comparer la forme qu'une portion de courbe représentative des données présente entre deux minima, avec la portion de courbe entre les deux minima précédents, pour déterminer dans quelle portion de courbe le système se trouve. A titre de variante, il peut suffire de calculer la différence de temps entre deux minima successifs en fonction du temps, et de déterminer un maximum de cette nouvelle variable pour déterminer le moment auquel l'intégralité du fluide biopharmaceutique est congelé.

Ainsi, le système ci-dessus peut être utilisé pour déterminer, de manière purement qualitative l'état de congélation d'un fluide biopharmaceutique, parmi les états « pas entièrement congelé », « fin de congélation » et « entièrement congelé », simplement en surveillant l'évolution des valeurs de pression en fonction du temps, ou des valeurs obtenues à partir de ces valeurs de pression, et en en surveillant un motif particulier. Cette détermination peut se faire quelle que soit la taille du conteneur 23, en surveillant un unique paramètre, macroscopique de l'état du conteneur.

Le procédé ci-dessus peut nécessiter de connaitre l'état du fluide biopharmaceutique au début du procédé de traitement thermique (mais celui-ci est généralement connu). L'état du fluide biopharmaceutique au début du procédé de traitement thermique peut toutefois être déterminé par le système en analysant la première portion des données de pression en fonction du temps. Ainsi, ce paramètre ne nécessite pas d'être entré par l'utilisateur dans l'unité centrale 14.

Le système qui vient d'être décrit a été décrit pour le cas d'une pression régulée à une pression constante, c'est-à-dire comprise entre un seuil maximal et un seuil minimal proches à l'échelle de la valeur de la pression. Toutefois, en variante, on pourrait utiliser n'importe quel profil de pression.

Le procédé décrit ci-dessus ne nécessite pas de connaître la valeur absolue mesurée de la pression, mais simplement de surveiller l'évolution de cette valeur au cours du temps.

En variante, on n'utilisera pas directement la mesure de pression, mais simplement des données représentatives du signal d'ouverture de la valve 61 et/ou de la valve 80 au cours du temps. Ces données peuvent être représentées par une courbe binaire présentant une succession d'états 1 au cours du temps, séparés par des états 0. Ainsi, l'état 0 le plus long peut correspondre à la fin du processus de congélation. Ainsi, le paramètre de contrôle peut être un paramètre binaire relatif à l'ouverture ou non d'une ou deux valves d'un système à pression régulée. Dans un tel procédé, il peut être utile pour le système de connaître l'état initial du fluide biopharmaceutique contenu dans le conteneur 23. Ainsi, l'utilisateur peut utiliser l'interface 12 pour entrer un paramètre d'état initial du fluide dans la mémoire 14.

En variante, on pourrait prévoir une valve unique fonctionnant dans les deux sens, et remplaçant les deux valves d'entrée 61 et de sortie 80. Une telle valve bidirectionnelle peut être fournie sur le tronçon commun 60c. Si la valve unique fournit un signal présentant un signe différent selon le sens d'ouverture (sens de passage du gaz), on peut obtenir l'état de congélation du fluide directement à partir des données représentatives de ce signal au cours du temps, selon les mêmes principes que ceux exprimés ci-dessus.

On notera que, le cas échéant, la détermination ci-dessus pourra être utilisée par l'unité centrale 14 conjointement à d'autres paramètres déterminés pour le conteneur 23, tels que des paramètres locaux. Par exemple, on utilise conjointement des sondes de température.

En variante, on pourra placer le détecteur de pression à l'intérieur du conteneur 23, plutôt que dans la ligne 60, auquel cas le signal pourra être transmis à l'unité centrale 14 par le port 31.

Conformément à l'invention, l'enveloppe du conteneur 23 est sensiblement inextensible.

Selon un deuxième mode de réalisation ne faisant pas partie de l'invention, on peut obtenir un contrôle plus précis de l'état de congélation du fluide biopharmaceutique. Comme on le comprend de la description ci-dessus, le procédé ci-dessus permet simplement de qualifier l'état de congélation parmi 3 états (voire 4 états, si on considère l'état initial du fluide biopharmaceutique à une température strictement supérieure à la température de début de passage à l'état solide).

On peut obtenir un contrôle plus précis en quantifiant l'état de congélation du fluide biopharmaceutique. Cette variante de réalisation nécessite d'utiliser des valeurs quantitatives. En particulier, le paramètre quantitatif d'intérêt est la quantité de gaz présente dans le conteneur 23.

Un exemple particulier ne faisant pas partie de l'invention sera donné dans le cadre d'une opération de congélation de fluide biopharmaceutique initialement à l'état liquide. On peut déterminer la quantité de gaz initiale présente dans le conteneur. Cette quantité initiale est déterminée par tout moyen adapté. Par exemple, elle peut être estimée à partir du volume intérieur du conteneur (ce volume est généralement connu du fait de la fabrication du conteneur), du volume de fluide biopharmaceutique à l'état liquide (ce volume peut être par exemple déterminé à partir de la masse du conteneur, de la température interne au conteneur (qui peut être la température ambiante, ou déterminée à l'aide d'une sonde), et d'une table donnant la densité du fluide biopharmaceutique en fonction de la température)), de la température (estimée de la manière déjà évoquée), et de la pression mesurée par le détecteur de pression 57.

Si on connait en outre la densité du fluide biopharmaceutique à l'état liquide et à l'état solide à la température de transition entre ces deux phases, on peut déterminer la proportion de fluide biopharmaceutique à l'état solide à partir de l'ensemble de ces données.

Ainsi, en mesurant la masse de gaz sortante (par exemple avec un débimètre de masse), et connaissant la masse de gaz initiale, on connait la masse de gaz restante dans le conteneur 23. Connaissant également la pression à l'aide du détecteur de pression 57, et la température moyenne (connue d'une table), on connait le volume de gaz restant dans le conteneur 23.. Le paramètre macroscopique peut donc être la quantité de matière (ou la masse) en phase gazeuse dans le conteneur.

On notera ainsi qu'il existe de nombreuses variantes pour déterminer l'évolution de l'état de congélation d'un fluide biopharmaceutique à partir d'un paramètre macroscopique du conteneur 23. A part la pression dans l'espace de tête du conteneur 23, on pourrait contrairement à l'invention utiliser l'évolution de la masse totale du conteneur 23, ou l'évolution du volume total du conteneur 23, par exemple.

Les différents exemples qui viennent d'être décrits montrent en particulier la détection de la fin du processus de transformation du fluide de la phase liquide à la phase solide. En variante, on ne s'intéresse pas qu'à cet instant précis. On pourrait par exemple utiliser une même méthode pour déterminer le début de la congélation. En effet, l'instant de début de la congélation est bien visible sur la figure 7, comme étant l'instant avant que la valve de sortie 80 commence à être commandée.

Selon une variante non conforme à l'invention, dans laquelle le conteneur 23 est muni d'un port d'entrée/sortie de gaz 30, l'état d'avancement du processus de congélation est déterminé à partir des variations du volume gazeux. En effet, à volume de conteneur constant, $dV_g/dt = -dV_h/dt$, où $d./dt$ désigne la dérivée par rapport au temps, $V_g$ le volume de glace, et $V_h$ le volume gazeux.

Les variations dans le temps du volume gazeux $V_h$ peuvent être déterminées à partir d'une caractérisation de l'écoulement gazeux à travers le port d'entrée/sortie de gaz 30. Cette étape est mise en oeuvre au cours du procédé de congélation.

Le système de régulation de pression est désactivé. Le port d'entrée/sortie de gaz 30 est ouvert, et on laisse la pression s'abaisser jusqu'à atteindre une valeur OP2 (par exemple 5 millibars (mbars)) en passant par une valeur OP1 (par exemple 20 mbars) supérieure à OP2.

La durée $\Delta t$ d'échappement du gaz nécessaire entre la détection du premier niveau de surpression OP1 et la détection du deuxième niveau de surpression OP2 par le capteur de pression 19 est déterminée par un compteur de temps. On comprend que le capteur de pression 19 peut réaliser plusieurs mesures rapprochées d'un paramètre du gaz représentatif du niveau de surpression dans le volume interne de remplissage, des signaux de sortie ou un signal de sortie continu étant typiquement délivrés par le capteur de pression 19 vers le dispositif de contrôle 4. Par exemple, le démarrage de l'opération du compteur de temps dépend d'un signal de détection du premier niveau de surpression OP1, reçu par le dispositif de contrôle 4, tandis que l'arrêt de l'opération du compteur de temps dépend d'un signal de détection du deuxième niveau de surpression OP2, reçu par le dispositif de contrôle 4.

En l'occurrence, dans le présent exemple, la durée $\Delta t$ d'échappement du gaz est égale à 50 secondes. Dans une forme de réalisation du dispositif de contrôle 4, un algorithme est prévu pour effectuer, à partir des paramètres d'entrées indiqués ci-dessus et de cette durée $\Delta t$ d'échappement du gaz, un calcul du volume interne de remplissage de gaz. Une routine pour la mise en oeuvre de cet algorithme est par exemple stockée dans la mémoire et activée par le système d'analyse 62. L'algorithme peut permettre de réaliser deux étapes de calcul successives :

- le calcul d'une constante de décroissance k, caractéristique du flux d'échappement de gaz, selon l'équation suivante :

$$k = - \ln (OP2/OP1) / \Delta t$$

où $\ln$ représente la fonction logarithme népérien.
- le calcul du volume interne de remplissage de gaz par utilisation de la corrélation suivante :

$$Vg = Q / k + Vc$$

où Q est une constante de débit volumique et Vc est une constante de volume, ces deux constantes Q et VC étant déterminées expérimentalement, à partir d'expériences dans lesquelles le volume interne Vg est déjà connu pour un conteneur 23 similaire, lors d'un processus antérieur de calibration. Les paramètres Vg et l'inverse 1/k étant considérés comme les entrées pour la régression linéaire ci-dessus, on obtient expérimentalement en sortie les valeurs des constantes Q et Vc. La corrélation est en correspondance avec le modèle physique d'écoulement de gaz applicable pour l'échappement de gaz au travers du port d'entrée/sortie de gaz 30 et via la valve d'échappement de gaz associée.

Les deux constantes Q et Vc peuvent spécifiquement dépendre du dimensionnement de l'installation et/ou de paramètres de remplissage en fluide biopharmaceutique B du conteneur 23 pouvant être considérés comme invariables. Pour cette corrélation relative au volume obtenue par régression linéaire simple, la constante Q est ici une pente ou gradient (appelée « volume estimator slope » en anglais), tandis que la constante Vc est ici l'intersection (appelée « volume estimator intercept » en anglais).

Dans des conditions d'expérimentation pour lesquelles la constante Q a été évaluée à 0,288 L/s (17,28 L/min) et la constante Vc a été évaluée à 5,066 L, et pour le cas susmentionné où la durée $\Delta t$ d'échappement du gaz déterminée par l'unité de contrôle 7 est égale à 50 secondes pour passer de 20 mbar à 5 mbar, le calcul par l'algorithme permet d'obtenir une valeur de k calculée comme suit :

$$k = - \ln (5/20) / 50 = 0,00277 \ s^{-1}$$

Il s'ensuit que le volume interne de remplissage Vg est estimé avec le calcul suivant à 15,5 L en prenant en compte les valeurs des constantes Q et Vc indiquées ci-dessus :

$$Vg = 0,288 / 0,0277 + 5,066$$

Le système de régulation de pression est remis en route.

On reproduit les étapes ci-dessus au cours du temps pour déterminer le volume de gaz au cours du temps et, de fait, le volume de fluide biopharmaceutique au cours du temps. Le volume de fluide biopharmaceutique est directement lié à l'état d'avancement du processus de congélation. L'échelle de temps du processus de congélation est grande par rapport au processus ci-dessus, ce qui permet de le mettre en oeuvre de manière répétée sans influence néfaste sur le processus de congélation lui-même.

Par ailleurs, les procédés ci-dessus ont été décrits dans le cadre d'un procédé de congélation. Un procédé similaire pourrait être utilisé dans le cadre d'un procédé de décongélation. Notamment, un tel procédé pourrait être utile pour déterminer le début de la transformation de la phase solide en phase liquide. Ceci pourra être détecté lorsque la courbe de pression en fonction du temps passera d'une portion de relâchement répété de gaz (due à l'expansion du fluide à l'état solide dont la densité diminue avec la température), à une portion d'admission de gaz.

A tout moment, on peut ainsi déterminer l'état de congélation du fluide biopharmaceutique contenu dans le conteneur 23. Cette information peut être utilisée pour contrôler le traitement thermique. Par exemple, cette information peut être utilisée pour modifier le traitement thermique (notamment pour mettre fin au traitement thermique). Par exemple, en fonction de cette information, l'unité centrale 14 peut commander au générateur thermique 9 d'appliquer un profil de température différent aux éléments applicateurs 8. Par exemple, l'unité centrale 14 peut comparer l'avancement du processus de traitement thermique à un profil prédéterminé stocké dans la mémoire 13, et modifier le traitement thermique en fonction de cette comparaison. Le profil prédéterminé stocké correspond par exemple à une moyenne de profils obtenus lors de traitements thermiques précédents, ou un profil de consigne souhaitée pour le traitement thermique.

Selon une autre variante, en fonction de cette information, l'unité centrale 14 peut commander au générateur thermique 9 d'appliquer une distribution géographique particulière au traitement thermique appliqué. Par exemple, si les éléments applicateurs 8 sont commandables de manière indépendante, l'unité centrale 14 peut faire appliquer au générateur thermique 9 un traitement thermique différent aux différents éléments applicateurs. Ainsi, dans l'exemple de la figure 4, on peut prévoir que les deux éléments applicateurs 8 soient commandés indépendamment. Par conséquent, le profil de traitement thermique appliqué sur chaque face latérale du conteneur 23 peut être différent.

En se référant à nouveau à la figure 3, on a décrit un socle 44 accueillant un réceptacle 5. Comme on peut le voir sur la figure 3, le socle 44 peut accueillir plusieurs réceptacles 5, qui seront placés par exemple de manière adjacente les uns aux autres sur le socle 44. C'est-à-dire que l'installation de traitement thermique peut appliquer un traitement thermique à plusieurs conteneurs 23 simultanément.

On peut prévoir pour chaque conteneur 23 un dispositif de contrôle de l'état de congélation du fluide biopharmaceutique contenu dans ce conteneur. Ainsi, chaque dispositif de contrôle est apte à déterminer l'état de congélation du fluide biopharmaceutique de son conteneur 23 propre, de manière indépendante. Le cas échéant, on utilise un même système d'analyse 62 pour les différents conteneurs.

On peut prévoir que l'unité centrale 14 applique un traitement thermique différent aux différents conteneurs 23, sur la base des informations sur l'état de congélation transmise depuis chaque conteneur. Quand on traite simultanément un groupe de conteneurs, présentant des conteneurs plus centraux et des conteneurs plus périphériques, le profil thermique à l'intérieur des différents conteneurs peut différer, même si les applicateurs 8 associés à chaque conteneur reçoivent des consignes identiques. Aussi, l'unité centrale 14 peut commander au générateur thermique 9 de générer des traitements thermiques différents pour les différents conteneurs 23.

L'invention a été décrite ci-dessus pour un mode de réalisation particulier de récipient 3 et d'installation de traitement thermique 2. Toutefois, l'invention n'est pas limitée à ces réalisations. En variante, on pourra utiliser d'autres types de récipients, et/ou d'autres types d'installation de traitement thermique.

Par exemple, dans un mode de réalisation particulier, le conteneur 23 pourra être réalisé rigide ou indéformable. Dans un autre mode de réalisation ne faisant pas partie de l'invention, l'enveloppe 25 du conteneur 23 pourra être réalisé extensible. On peut utiliser comme paramètre macroscopique un paramètre combinant la pression dans l'espace de tête du conteneur 23 et le volume de l'enveloppe.

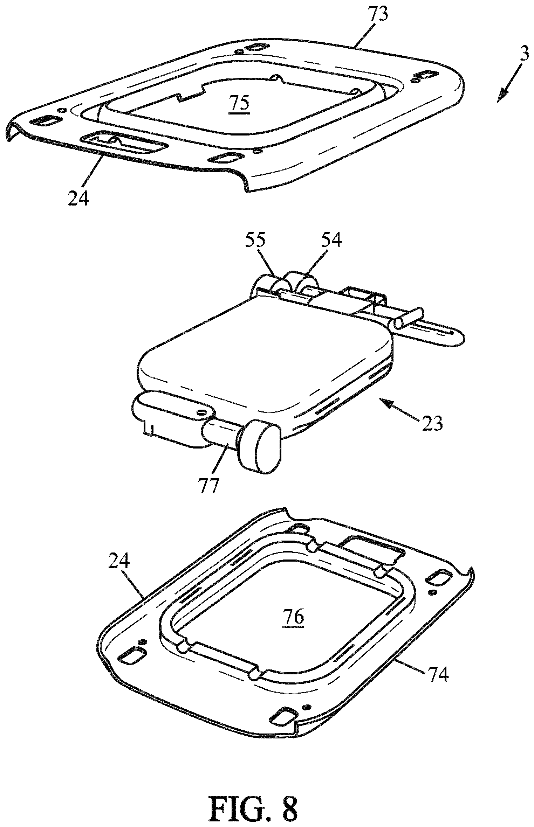

La figure 8 représente encore un autre exemple de réalisation de récipient 3 ne faisant pas partie de l'invention. Comme dans les modes de réalisation précédents, ce récipient comprend un conteneur 23 et une structure 24. La structure 24 est ici réalisée en deux parties 73 et 74 indépendantes assemblables l'une à l'autre, le conteneur 23 étant disposé entre les deux parties 73 et 74. Dans cet exemple, chaque partie 73 est réalisée sous la forme d'une coque formant un cadre définissant une ouverture centrale, 75, 76 respectivement, par laquelle le conteneur 23 dépasse. La portion de tête du conteneur 23 est équipée de deux lignes de remplissage et de vidange 54 et 55 qui sont disposées entre les deux parties 73 et 74 formant coque et protégées par celles-ci. La ligne de transmission 58 et la ligne 60 d'admission de gaz ne sont pas représentées dans cet exemple, mais peuvent être fournie de manière parallèle. La partie de fond du conteneur 23 flexible peut être équipé d'un port 77 où on peut monter un capteur de température local, ou toute autre instrumentation souhaitée.

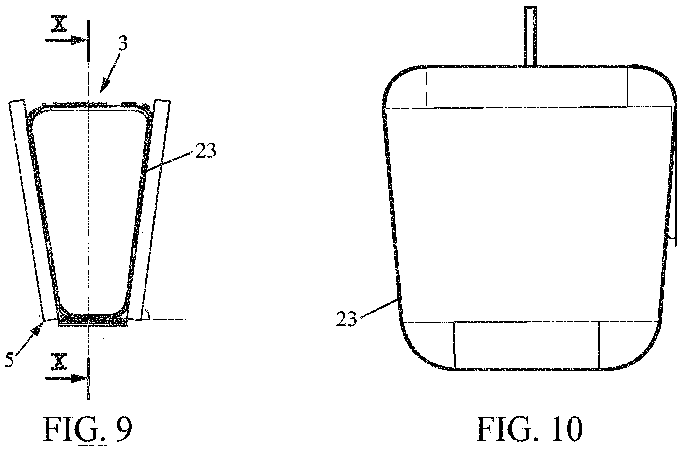

Les figures 9 et 10 représentent encore une variante de réalisation, respectivement en vue de côté et de face. Selon ce mode de réalisation, une différence avec les exemples précédents est que le réceptacle 5 de l'installation de traitement thermique présente, en vue transversale, une forme légèrement évasée en s'élargissant vers le haut selon l'axe vertical. Le récipient 3 peut présenter une forme adaptée à cette forme de réceptacle. En particulier, le conteneur 23 peut présenter une largeur supérieure en partie supérieure qu'en partie inférieure. Par ailleurs, comme visible sur la figure 10, le réceptacle 5 de l'installation de traitement thermique peut présenter, en vue transversale orthogonale, une forme légèrement évasée en s'élargissant vers le haut selon l'axe vertical, également. Le récipient 3 peut présenter une forme adaptée à cette forme de réceptacle. En particulier, le conteneur 23 peut présenter une largeur supérieure en partie supérieure qu'en partie inférieure également selon cette vue. La structure 24 du récipient 3 est adaptée à la forme du conteneur 23. L'intérêt de cette forme évasée est de fournir un meilleur contrôle de la propagation du front de congélation lors du passage du fluide de l'état liquide à l'état solide lors d'un traitement thermique de congélation.

## Revendications

1. Dispositif de contrôle (4) apte à contrôler l'état de congélation d'un fluide biopharmaceutique dans un conteneur (23) destiné à recevoir un fluide biopharmaceutique devant passer entre l'état liquide et l'état congelé, comprenant une enveloppe (25) périphérique en matière plastique sensiblement inextensible, apte et destiné à être associé à un réceptacle (5) de traitement thermique,

   **caractérisé par le fait qu'**il comporte un capteur de pression (19, 57) adapté pour détecter, de manière répétée au cours du temps au cours du procédé de traitement thermique, un paramètre de contrôle qui est un paramètre macroscopique du conteneur, ledit paramètre de contrôle étant une pression de gaz dans une partie supérieure (27) du conteneur ménagée au-dessus du fluide biopharmaceutique à une partie terminale de tête du conteneur emplie d'un gaz,

   comprenant une ligne (60) d'entrée/de sortie du gaz apte à être associée en communication et de manière étanche avec un port (30) d'entrée/de sortie de gaz du conteneur, ledit port étant situé dans une partie supérieure (27) du conteneur ménagée au-dessus du fluide biopharmaceutique dans une partie terminale de tête du conteneur, un système de régulation destiné à commander l'admission/le relâchement du gaz dans/depuis la partie supérieure du conteneur (27), via le port (30) d'entrée/de sortie de gaz de la ligne (60) d'entrée/de sortie de gaz, selon un profil de pression souhaité dans l'espace de tête du conteneur, et un système d'analyse (62) adapté pour détecter un changement brutal des valeurs de la pression de gaz dans l'espace de tête mesurée par le capteur de pression (19, 57) au cours du temps lors d'un changement d'état de congélation du fluide biopharmaceutique, et en surveillant un motif particulier de la courbe de pression en fonction du temps, comprenant l'une et/ou l'autre des caractéristiques suivantes :

   - les valeurs de la pression au cours du temps présentent un changement brutal lorsqu'on passe entre un état où l'intégralité du fluide biopharmaceutique n'est pas congelée et un état où une portion du fluide biopharmaceutique est congelée ;
   - les valeurs de la pression au cours du temps présentent un changement brutal lorsqu'on passe entre un état où une portion du fluide biopharmaceutique n'est pas congelée et un état où l'intégralité du fluide biopharmaceutique est congelé.

2. Dispositif de contrôle selon la revendication 2, dans lequel le système d'analyse (62) est adapté pour déterminer un état de congélation du fluide biopharmaceutique sur la base d'une valeur absolue du paramètre de contrôle ;

   Et dans lequel, optionnellement, le système d'analyse (62) est adapté pour déterminer l'état de congélation du fluide biopharmaceutique sur la base d'une valeur initiale du paramètre de contrôle, et d'une évolution dans le temps de la valeur absolue du paramètre de contrôle déterminée à partir du capteur (19).

3. Dispositif de contrôle selon l'une des revendications 1 ou 2, qui comporte en outre une valve (61 ; 80) d'ouverture / de fermeture associée au port d'entrée / de sortie de gaz.

4. Dispositif de contrôle selon l'une des revendications 1 à 3, comprenant en outre un moyen (60) apte et destiné à admettre / relâcher du gaz dans / de l'espace de tête, via le port (30) d'entrée / de sortie de gaz et la ligne d'entrée / de sortie de gaz.

   Et dans lequel, le système de régulation apte et destiné à commander l'admission / le relâchement du gaz dans / depuis la partie supérieure (27), via le port (30) d'entrée / de sortie de gaz et la ligne d'entrée / de sortie de gaz, opère de sorte à admettre du gaz lorsque la pression du gaz dans la partie supérieure (27) diminue et à relâcher du gaz lorsque la pression du gaz dans la partie supérieure (27) augmente.

5. Dispositif de contrôle selon l'une des revendications 1 à 4, comprenant en outre un système de commande (14') adapté pour commander thermiquement le réceptacle (5) de congélation en fonction de l'état de congélation déterminé par le système d'analyse (62).

6. Système de traitement thermique d'un fluide biopharmaceutique comprenant un réceptacle (5) de traitement thermique apte et destiné à recevoir un conteneur de fluide biopharmaceutique, et un dispositif de contrôle (4) selon l'une quelconque des revendications 1 à 5 ; comprenant, une pluralité d'applicateurs thermiques (8) dans le réceptacle, commandables indépendamment, et dans lequel le système de commande (14') commande indépendamment lesdits applicateurs thermiques.

7. Système selon la revendication 6, comprenant une pluralité de réceptacles (5) de traitement thermique chacun apte et destiné à recevoir un conteneur (23) respectif de fluide biopharmaceutique, et chaque réceptacle (5) étant commandable indépendamment par le système de commande (14'), dans lequel le système de commande (14') est adapté pour commander indépendamment chaque réceptacle (5) de traitement thermique selon l'état de congélation déterminé pour chaque conteneur.

8. Méthode de contrôle de l'état de congélation d'un fluide biopharmaceutique dans un conteneur (23) destiné à recevoir un fluide biopharmaceutique devant passer entre l'état liquide et l'état congelé, comprenant une enveloppe (25) périphérique sensiblement inextensible en matière plastique, apte et destiné à être associé à un réceptacle (5) de traitement thermique,
caractérisé par le fait qu'un capteur de pression (19, 57) détecte, de manière répétée au cours du temps au cours du procédé de traitement thermique, un paramètre de contrôle qui est un paramètre macroscopique du conteneur (23), ledit paramètre de contrôle étant une pression de gaz dans une partie supérieure (27) du conteneur ménagée au-dessus du fluide biopharmaceutique dans une partie terminale de tête du conteneur emplie d'un gaz ;
qu'un système de régulation commande l'admission/le relâchement du gaz dans/depuis la partie supérieure (27), via un port (30) d'entrée/de sortie de gaz d'une ligne (60) d'entrée/de sortie de gaz, selon un profil de pression souhaité dans l'espace de tête du conteneur, ladite ligne (60) d'entrée/de sortie du gaz apte étant associée en communication et de manière étanche avec le port (30) d'entrée/de sortie de gaz du conteneur, ledit port étant situé dans la partie supérieure (27) du conteneur ménagée au-dessus du fluide biopharmaceutique à une partie terminale de tête du conteneur, et et qu'un système d'analyse (62) détecte un changement brutal des valeurs de la pression de gaz dans l'espace de tête mesurée par le capteur de pression (19, 57) au cours du temps lors d'un changement d'état de congélation du fluide biopharmaceutique, et en surveillant un motif particulier de la courbe de pression en fonction du temps, comprenant l'une et/ou l'autre des caractéristiques suivantes :

- les valeurs de la pression au cours du temps présentent un changement brutal lorsqu'on passe entre un état où une portion du fluide biopharmaceutique n'est pas congelée et un état où l'intégralité du fluide biopharmaceutique est congelé ;
- les valeurs de la pression au cours du temps présentent un changement brutal lorsqu'on passe entre un état où l'intégralité du fluide biopharmaceutique n'est pas congelée et un état où une portion du fluide biopharmaceutique est congelée.

## Patentansprüche

1. Vorrichtung zur Kontrolle (4) des Gefrierzustands einer biopharmazeutischen Flüssigkeit in einem Behälter (23) zum Aufnehmen einer biopharmazeutischen Flüssigkeit vor dem Übergang zwischen dem flüssigen Zustand und dem gefrorenen Zustand, der eine im Wesentlichen nicht dehnbare umlaufende Hülle (25) aus Kunststoffmaterial umfasst, die dazu geeignet und bestimmt ist, mit einem Thermobehandlungsgefäß (5) in Kontakt gebracht zu werden, **dadurch gekennzeichnet, dass** sie einen Sensor (19, 57) umfasst, der dafür ausgelegt ist, im Zeitverlauf während des Thermobehandlungsverfahrens einen Kontrollparameter wiederholt zu erfassen, der ein makroskopischer Parameter des Behälters ist, wobei der Kontrollparameter ein Gasdruck in einem oberen Teil (27) des Behälters ist, der oberhalb der biopharmazeutischen Flüssigkeit an einem mit einem Gas gefüllten Kopfendteil des Behälters geformt ist, umfassend eine Gaseintritts-/-austrittsleitung (60), die dafür ausgelegt ist, in Kommunikation und dicht mit einer Gaseintritts-/-austrittsöffnung (30) des Behälters verbunden zu werden, wobei sich die Öffnung in einem oberen Teil (27) des Behälters befindet und oberhalb der biopharmazeutischen Flüssigkeit an einem mit einem Gas gefüllten Kopfendteil des Behälters geformt ist,
ein Regulationssystem, das dafür geeignet und bestimmt ist, den Einlass/das Ablassen von Gas in den/von dem oberen Teil (27) über die Gaseintritts-/-austrittsöffnung (30) der Gaseintritts-/- austrittsleitung (60) gemäß einem gewünschten Druckprofil im Kopfraum zu steuern,
und ein Analysesystem (62), das dafür ausgelegt ist, eine sprunghafte Änderung der Werte für den Gasdruck im Kopfraum, der vom Drucksensor (19, 57) im Zeitverlauf während einer Veränderung des Gefrierzustands der biopharmazeutischen Flüssigkeit gemessen wird, zu erfassen, umfassend eines und/oder beide der folgenden Merkmale:

- die Werte des Parameters zeigen im Zeitverlauf eine sprunghafte Änderung, wenn man zwischen einem Zustand, in dem die Gesamtheit der biopharmazeutischen Flüssigkeit nicht gefroren ist, und einem Zustand, in dem ein Anteil der biopharmazeutischen Flüssigkeit gefroren ist, wechselt;
- die Werte des Parameters zeigen im Zeitverlauf eine sprunghafte Änderung, wenn man zwischen einem Zustand, in dem ein Anteil der biopharmazeutischen Flüssigkeit nicht gefroren ist, und einem Zustand, in dem die Gesamtheit der biopharmazeutischen Flüssigkeit gefroren ist, wechselt.

2. Kontrollvorrichtung nach Anspruch 1, wobei das Analysesystem (62) dafür ausgelegt ist, einen Gefrierzustand der biopharmazeutischen Flüssigkeit auf der Basis eines Absolutwerts des Kontrollparameters zu bestimmen;
und wobei gegebenenfalls das Analysesystem (62) dafür ausgelegt ist, den Gefrierzustand der biopharmazeutischen Flüssigkeit auf der Basis eines Anfangswerts des Kontrollparameters und einer durch den Sensor (19) bestimmten Veränderung des Absolutwerts des Kontrollparameters im Zeitverlauf zu bestimmen.

3. Kontrollvorrichtung nach einem der Ansprüche 1 oder 2, die außerdem ein Öffnungs-/Schließventil (61; 80) in Verbindung mit der Gaseintritts-/-austrittsöffnung umfasst.

4. Kontrollvorrichtung nach einem der Ansprüche 1 bis 3, die außerdem ein Mittel (60) umfasst, das dafür geeignet und bestimmt ist, Gas in den/aus dem Kopfraum über die Gaseintritts-/-austrittsöffnung (30) und die Gaseintritts-/-austrittsleitung einzulassen/abzulassen; und wobei gegebenenfalls das Regulationssystem, das dafür geeignet und bestimmt ist, den Einlass/das Ablassen von Gas in den/von dem oberen Teil (27) über die Gaseintritts-/-austrittsöffnung (30) der Gaseintritts-/-austrittsleitung (60) zu steuern, so arbeitet, dass Gas eingelassen wird, wenn sich der Gasdruck im oberen Teil (27) verringert, und Gas abgelassen wird, wenn sich der Gasdruck im oberen Teil (27) erhöht.

5. Kontrollvorrichtung nach einem der Ansprüche 1 bis 4, das außerdem ein Steuerungssystem (14') zum thermischen Steuern des Gefriergefäßes (5) in Abhängigkeit von dem durch das Analysesystem (62) bestimmten Gefrierzustand umfasst.

6. System zur thermischen Behandlung einer biopharmazeutischen Flüssigkeit, umfassend ein Thermobehandlungsgefäß (5), das dafür geeignet und bestimmt ist, einen Behälter mit biopharmazeutischer Flüssigkeit aufzunehmen, und eine Kontrollvorrichtung (4) nach einem der Ansprüche 1 bis 5;
gegebenenfalls umfassend eine Mehrzahl von unabhängig steuerbaren Thermoapplikatoren (8) in dem Gefäß, und wobei das Steuerungssystem (14') die Thermoapplikatoren unabhängig steuert.

7. System nach Anspruch 6, umfassend eine Mehrzahl von Thermobehandlungsgefäßen (5), die jeweils dafür geeignet und bestimmt sind, einen jeweiligen Behälter (23) mit biopharmazeutischer Flüssigkeit aufzunehmen, und wobei jedes Gefäß (5) unabhängig von dem Steuerungssystem (14') steuerbar ist, wobei das Steuerungssystem (14') dafür ausgelegt ist, jedes Thermobehandlungsgefäß (5) unabhängig je nach dem für den jeweiligen Behälter ermittelten Gefrierzustand zu steuern.

8. Verfahren zur Kontrolle des Gefrierzustands einer biopharmazeutischen Flüssigkeit in einem Behälter (23) zur Aufnahme einer biopharmazeutischen Flüssigkeit vor dem Übergang zwischen dem flüssigen Zustand und dem gefrorenen Zustand, der eine im Wesentlichen nicht dehnbare umlaufende Hülle (25) aus Kunststoffmaterial umfasst, die dazu geeignet und bestimmt ist, mit einem Thermobehandlungsgefäß (5) in Kontakt gebracht zu werden,
**dadurch gekennzeichnet, dass** ein Sensor (19, 57) wiederholt im Zeitverlauf während des Thermobehandlungsverfahrens einen Kontrollparameter erfasst, der ein makroskopischer Parameter des Behälters (23) ist, wobei der Kontrollparameter ein Gasdruck in einem oberen Teil (27) des Behälters ist, der oberhalb der biopharmazeutischen Flüssigkeit an einem mit einem Gas gefüllten Kopfendteil des Behälters geformt ist;
dass ein Regulationssystem den Einlass/das Ablassen von Gas in den/von dem oberen Teil (27) über eine Gaseintritts-/-austrittsöffnung (30) einer Gaseintritts-/-austrittsleitung (60) gemäß einem gewünschten Druckprofil im Kopfraum steuert, wobei die geeignete Gaseintritts-/-austrittsleitung (60) in Kommunikation und dicht mit der Gaseintritts-/-austrittsöffnung (30) des Behälters verbunden ist, wobei sich die Öffnung in dem oberen Teil (27) des Behälters befindet und oberhalb der biopharmazeutischen Flüssigkeit an einem mit einem Gas gefüllten Kopfendteil des Behälters geformt ist, und
dass ein Analysesystem (62) eine sprunghafte Änderung der Werte für den Gasdruck im Kopfraum erfasst, der von dem Drucksensor (19, 57) im Zeitverlauf während einer Veränderung des Gefrierzustands der biopharmazeutischen Flüssigkeit gemessen wird, umfassend eines und/oder beide der folgenden Merkmale:

- die Werte des Parameters zeigen im Zeitverlauf eine sprunghafte Änderung, wenn man zwischen einem Zustand, in dem ein Anteil der biopharmazeutischen Flüssigkeit nicht gefroren ist, und einem Zustand, in dem die Gesamtheit der biopharmazeutischen Flüssigkeit gefroren ist, wechselt;
- die Werte des Parameters zeigen im Zeitverlauf eine sprunghafte Änderung, wenn man zwischen einem Zustand, in dem die Gesamtheit der biopharmazeutischen Flüssigkeit nicht gefroren ist, und einem Zustand, in dem ein Anteil der biopharmazeutischen Flüssigkeit gefroren ist, wechselt.

**Claims**

1. Monitoring device (4) for monitoring the freezing state of a biopharmaceutical fluid in a container (23) intended to receive a biopharmaceutical fluid that is to transition between the liquid state and the frozen state, wherein the device comprises a peripheral envelope (25) made of substantially non-extensible plastic, intended and suitable for association with a thermal treatment receptacle (5),
**characterized in that** the device further comprises a pressure sensor (19, 57) suitable for repeatedly detecting, over time during the thermal treatment process, a control parameter which is a macroscopic parameter of the container, said control parameter being a gas pressure in a upper portion (27) of the container arranged above the biopharmaceutical fluid in an end head portion of the container, said portion being filled with a gas, comprising a gas entry/exit line (60) adapted to be associated in a fluidtight communication with a gas entry/exit port (30) of the container, said port being located in an upper portion (27) of the container arranged above the biopharmaceutical fluid in an end head portion of the container, a regulation system intended and suitable for controlling the entry/release of gas into/from the upper portion (27) of the container via the gas entry/exit port (30) of the gas entry/exit line (60), according to a desired pressure profile in the headspace of the container,
and an analysis system (62) adapted to detect an abrupt change of gas pressure values in the headspace of the container measured by the pressure sensor (19, 57) over time when there is a change in the freezing state of the biopharmaceutical fluid and by watching a particular pattern in the evolution of the pressure values over time, comprising one and/or the other of the following features:

   - the pressure values over time show an abrupt change when transitioning between a state where the entire biopharmaceutical fluid is not frozen and a state where a portion of the biopharmaceutical fluid is frozen,
   - the pressure values over time show an abrupt change when transitioning between a state where a portion of the biopharmaceutical fluid is not frozen and a state where the entire biopharmaceutical fluid is frozen.

2. Monitoring device according to claim 1, wherein the analysis system (62) is adapted to determine a frozen state of the biopharmaceutical fluid on the basis of an absolute value of the control parameter,
And wherein, optionally, the analysis system (62) is adapted to determine the frozen state of the biopharmaceutical fluid on the basis of an initial value of the control parameter, and of a change over time in the absolute value of the control parameter determined from the sensor (19).

3. Monitoring device according to claims 1 or 2, further comprising an opening/closing valve (61; 80) associated with the gas entry/exit port.

4. Monitoring device according to claims 1 to 3, further comprising a means (60) intended and suitable for allowing the entry/release of gas into/from the headspace, via the gas entry/exit port (30) and the gas entry/exit line,
And wherein, the regulation system intended and suitable for controlling the entry/release of gas into/from the upper portion (27), via the gas entry/exit port (30) and the gas entry/exit line, operates so as to allow the entry of gas when the gas pressure in the upper portion (27) decreases and to release gas when the gas pressure in the upper portion (27) increases.

5. Monitoring device according to claims 1 to 4, further comprising a control system (14') suitable for thermally controlling the freezing receptacle (5) according to the freezing state determined by the analysis system (62).

6. Thermal treatment system for a biopharmaceutical fluid, comprising a thermal treatment receptacle (5) intended and suitable for receiving a container of biopharmaceutical fluid, and a monitoring device (4) according to any claims from 1 to 5; comprising a plurality of thermal applicators (8) in the receptacle, independently controllable, and wherein the control system (14') independently controls said thermal applicators.

7. System according to claim 6, comprising a plurality of thermal treatment receptacles (5) each intended and suitable for receiving a respective container (23) of biopharmaceutical fluid, each receptacle (5) being independently controllable by the control system (14'), wherein the control system (14') is adapted to control each thermal treatment receptacle (5) independently according to the freezing state determined for each container.

8. Method for monitoring the freezing state of a biopharmaceutical fluid in a container (23) intended to receive a biopharmaceutical fluid that is to transition between the liquid state and the frozen state, comprising a peripheral envelope (25) of substantially non-extensible plastic, intended and suitable for association with a thermal treatment receptacle (5),

**characterized in that** a pressure sensor (19, 57) repeatedly detects over time during the thermal treatment process a control parameter which is a macroscopic parameter of the container (23), said control parameter being a gas pressure in a upper portion (27) of the container arranged above the biopharmaceutical fluid in an end head portion of the container, said portion being filled with a gas,

a regulation system controls the entry/release of gas into/from the upper portion (27) of the container via the gas entry/exit port (30) of a gas entry/exit line (60), according to a desired pressure profile in the headspace of the container

said gas entry/exit line (60) being associated in a fluidtight communication with a gas entry/exit port (30) of the container, said port being located in an upper portion (27) of the container arranged above the biopharmaceutical fluid in an end head portion of the container,

and an analysis system (62) detects an abrupt change of gas pressure values in the headspace of the container measured by the pressure sensor (19, 57) over time when there is a change in the freezing state of the biopharmaceutical fluid and by watching a particular pattern in the evolution of the pressure values over time, comprising one and/or the other of the following features:

- the pressure values over time show an abrupt change when transitioning between a state where a portion of the biopharmaceutical fluid is not frozen and a state where the entire biopharmaceutical fluid is frozen,
- the pressure values over time show an abrupt change when transitioning between a state where the entire biopharmaceutical fluid is not frozen and a state where a portion of the biopharmaceutical fluid is frozen.

FIG. 1

**FIG. 2**

FIG. 3

FIG. 4

FIG. 5A

FIG. 5B

EP 2 975 930 B1

FIG. 6

FIG. 7

EP 2 975 930 B1

**FIG. 8**

FIG. 10

23

3

X

X

23

5

FIG. 9

**EP 2 975 930 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1441585 A
- WO 2007103917 A
- EP 1441586 A
- EP 1389292 A
- EP 1407302 A
- WO 2011063381 A
- WO 2012044403 A
- US 2012102982 A1
- US 3788090 A
- JP 2000044939 A
- WO 0004131 A1